(19) Europäisches Patentamt

European Patent Office

Office européen des brevets

(11) Veröffentlichungsnummer: **0 394 501 B1**

(12) **EUROPÄISCHE PATENTSCHRIFT**

(45) Veröffentlichungstag der Patentschrift: **07.10.92**

(51) Int. Cl.⁵: **C04B** 35/10, C01F 7/02, C09K 3/14

(21) Anmeldenummer: **89106820.7**

(22) Anmeldetag: **17.04.89**

(54) **Verfahren zur Herstellung von alpha-A1203-Sinterkörpern.**

(43) Veröffentlichungstag der Anmeldung:
**31.10.90 Patentblatt 90/44**

(45) Bekanntmachung des Hinweises auf die Patenterteilung:
**07.10.92 Patentblatt 92/41**

(84) Benannte Vertragsstaaten:
**AT BE CH DE ES FR GB IT LI NL SE**

(56) Entgegenhaltungen:
**EP-A- 0 227 374**
**US-A- 2 915 365**
**US-A- 3 226 191**
**US-A- 4 797 139**

(73) Patentinhaber: **H.C. Starck GmbH & Co. KG**
**Im Schleeke 78-91**
**W-3380 Goslar(DE)**

(72) Erfinder: **Möltgen, Paul, Dr.**
**Steigmattstrasse 2**
**W-7887 Laufenburg(DE)**

(74) Vertreter: **Steiling, Lothar, Dr. et al**
**c/o Bayer AG Konzernverwaltung RP Patente Konzern**
**W-5090 Leverkusen 1 Bayerwerk(DE)**

**Beschreibung**

Die vorliegende Erfindung betrifft ein Verfahren zur Herstellung von $\alpha$-Al$_2$O$_3$-Sinterkörpern, wobei ein Al$_2$O$_3$-Ausgangsmaterial einer hydrothermalen Behandlung unterzogen und das so erhaltene Produkt getrocknet, calziniert und gesintert wird.

Eine bevorzugte Anwendung von $\alpha$-Al$_2$O$_3$-Sinterkörpern ist deren Einsatz als Schleifmittel.

Neben geschmolzenen Korundschleifmitteln sind solche aus gesintertem Material schon seit ca. 50 Jahren bekannt. In der neueren Zeit wurden gesinterte Schleifmittel auf $\alpha$-Al$_2$O$_3$-Basis bekannt, deren mikrokristalline Struktur besondere schleiftechnische Vorteile mit sich brachte.

So wird in der US-A-4 314 827 ein mikrokristallines Schleifmaterial beschrieben, das über die Sol-Gel-Technik bei Sintertemperaturen von ca. 1400 °C hergestellt wird. Als Sinterhilfe wird eine modifizierende Komponente wie HfO$_2$, ZrO$_2$, MgO, ZnO, CoO, NiO u.a. zugesetzt.

In der EP-A-0 152 768 wird ein Schleifmaterial offenbart, welches ebenfalls durch Sintern eines Aluminiumoxidhydratgels hergestellt wird. Als Keimbildner werden hier zur Herabsetzung der Umwandlungstemperatur von $\gamma$-Al$_2$O$_3$ in $\alpha$-Al$_2$O$_3$ feinste $\alpha$-Al$_2$O$_3$-Teilchen zugesetzt. Weitere Zusätze von Kristallwachstumshemmern wie MgO, SiO$_2$, Cr$_2$O$_3$, Fe$_2$O$_3$, ZrO$_2$ können ebenfalls verwendet werden.

Ähnliche Verfahren und Stoffe gehen aus den DE-A-0 024 099, DE-A-3 219 607, US-A-4 518 397, US-A-4 574 003, US-A-4 623 364, EP-A-0 168 606, EP-A-0 200 487, EP-A-0 228 856, EP-A-0 209 084 und EP-A-0 263 810 hervor.

Allen vorgenannten Verfahren ist gemeinsam, daß sie über ein Sol-Gel-Verfahren mit feinstdispersem Aluminiumoxidmonohydrat vom Typ des Böhmits durchgeführt werden. Die verhältnismäßig teuren Rohstoffe, welche zum Beispiel über die Hydrolyse von Aluminium-organischen Verbindungen gewonnen werden, und die aufwendige Verfahrenstechnik lassen die Kosten des Sol-Gel-Korundes auf ein Vielfaches der herkömmlichen Korunde ansteigen.

In der EP-A-0 304 721 wird ein Verfahren beschrieben, über eine hydrothermale Behandlung von Al(OH)$_3$-haltigen Rohstoffen zu einem mikrokristallinen Böhmit zu kommen, das für einen Einsatz im Sol-Gel-Prozeß geeignet ist.

Hier ist es zwar gelungen, einen Teil des Ausgangsmaterials durch einen kostengünstigen Rohstoff zu ersetzen, man ist aber immer noch je nach Verwendungszweck des gewünschten Produktes auf feinstdisperses Böhmit als Keimmaterial in Mengen zwischen 7,5 % und 60 %, bezogen auf das Endprodukt Al$_2$O$_3$, angewiesen. Als feinstdisperses Böhmit wird wieder der über Al-Alkoxide gewonnene, sehr teure Ausgangsstoff verwendet.

Aufgabe dieser Erfindung ist es somit, ein Verfahren zur Herstellung eines mikrokristallinen $\alpha$-Al$_2$O$_3$-Sinterkörpers aufzuzeigen, welches die beschriebenen Nachteile des Standes der Technik nicht aufweist.

Es wurde nun gefunden, daß diese Anforderungen erfüllt werden durch ein hydrothermales Verfahren zur Herstellung von $\alpha$-Al$_2$O$_3$-Sinterkörpern, bei dem als Al$_2$O$_3$-Ausgangsmaterial chi-Al$_2$O$_3$ eingesetzt wird.

Gegenstand dieser Erfindung ist somit ein Verfahren zur Herstellung von $\alpha$-Al$_2$O$_3$-Sinterkörpern, wobei ein Al$_2$O$_3$-Ausgangsmaterial einer hydrothermalen Behandlung unterzogen wird, das so erhaltene Produkt getrocknet, calziniert und gesintert wird, welches dadurch gekennzeichnet ist, daß als Al$_2$O$_3$-Ausgangsmaterial chi-Al$_2$O$_3$ eingesetzt und die hydrothermale Behandlung in Gegenwart katalytischer Säuremengen und Sinteradditiven durchgeführt wird.

Bevorzugt wird das erfindungsgemäß eingesetzte chi-Al$_2$O$_3$ gemäß der DE-C-2 059 946 hergestellt. Dieses wird durch Stoßerhitzen in der sogenannten Schoppe-Kammer aus Aluminiumtrihydrat (Hydrargillit) hergestellt. Das so hergestellte aktive Oxid ist vollkommen böhmitfrei und weist eine Oberfläche von 300 m$^2$/g BET (gemessen nach der 1-Punkt-Stickstoff-Methode) auf.

Besonders gute Ergebnisse werden erzielt, wenn die hydrothermale Behandlung bei Temperaturen zwischen 150 und 250 °C eine halbe Stunde bis 5 Stunden lang durchgeführt wird. Bei einem Druck von ca. 20 bar wird das Ausgangsmaterial zu einem hochviskosen Gel umgesetzt. Die Menge der erfindungsgemäß zuzugebenden Sinteradditive beträgt bevorzugt 0,2 bis 10 Gew.-%, besonders bevorzugt 0,5 bis 2 Gew.-%. Erfindungsgemäß bevorzugte Sinteradditive sind Metalloxide, bevorzugt Spinelle oder während der Reaktionsbedingungen Spinelle bildende Metallverbindungen. Geeignete Sinteradditive sind in der EP-A-0 200 487 offenbart. Eine bevorzugte Alternative ist dadurch gekennzeichnet, daß als Sinteradditiv $\alpha$-Al$_2$O$_3$ eingesetzt wird.

Die hydrothermale Behandlung wird bevorzugt in Gegenwart von Salpetersäure als Säure durchgeführt. Das so erhaltene Gel kann vorteilhaft entlüftet werden, z.B. mit Hilfe einer Vakuumpresse, es wird anschließend getrocknet und schrittweise calziniert. Dies geschieht besonders vorteilhaft durch eine Erhitzung innerhalb von ca. 6 Stunden auf ca. 600 °C. Hieran schließt sich erfindungsgemäß eine Sinterung bevorzugt bei Temperaturen zwischen 1200 und 1600 °C, besonders bevorzugt zwischen 1300 und 1380 °C, an.

Nach dem erfindungsgemäßen Verfahren gelingt es, $\alpha$-Al$_2$O$_3$-Sinterkörper mit einer Dichte >95 % der theoretischen Dichte und einer Härte im Bereich von 16 bis 22 GPa herzustellen, deren Kristallitstruktur im Submicron-Bereich liegt.

Im folgenden wird die Erfindung beispielhaft erläutert, ohne daß darin eine Einschränkung zu sehen ist.

Beispiel 1

750 g chi-$Al_2O_3$ werden in 3 l destilliertem Wasser mit 150 ml konz. Salpetersäure und 14 g $Mg(NO_3)_2$ 30 Minuten im Autoklaven bei 20 bar und 200°C gerührt. Das Gel wird mit einer Vakuumpresse extrudiert und im Trockenschrank bei 80°C getrocknet. Das trockene Gel wird schrittweise innerhalb von 6 Stunden auf 600°C erhitzt, wobei das restliche Wasser und nitrose Gase entweichen. Das so calzinierte $Al_2O_3$ wird anschließend für 5 Stunden bei 1350°C gesintert.

Der erhaltene Stoff hat die folgenden Eigenschaften:
Härte:
21 GPa
Dichte:
98,8 % der Theorie
Kristallitgröße:
kleiner 1 $\mu$m

Beispiel 2

Wie Beispiel 1, als Sinterhilfe werden 7 g $\alpha$-$Al_2O_3$ eingesetzt.

Der erhaltene Stoff hat die folgenden Eigenschaften:
Härte:
21 GPa
Dichte:
99,0 %
Kristallitgröße:
kleiner 1 $\mu$m

Patentansprüche

1. Verfahren zur Herstellung von $\alpha$-$Al_2O_3$-Sinterkörpern, wobei ein $Al_2O_3$-Ausgangsmaterial einer hydrothermalen Behandlung unterzogen und das so erhaltene Produkt getrocknet, calziniert und gesintert wird, dadurch gekennzeichnet, daß als $Al_2O_3$-Ausgangsmaterial chi-$Al_2O_3$ eingesetzt und die hydrothermale Behandlung in Gegenwart katalytischer Säuremengen und Sinteradditiven durchgeführt wird.

2. Verfahren gemäß Anspruch 1, dadurch gekennzeichnet, daß das chi-$Al_2O_3$ durch Stoßerhitzen in der Schoppe-Kammer aus Aluminiumtrihydrat hergestellt wird.

3. Verfahren gemäß einem der Ansprüche 1 oder 2, dadurch gekennzeichnet, daß die hydrothermale Behandlung bei Temperaturen zwischen 150 und 250°C eine halbe Stunde bis 5 Stunden lang durchgeführt wird.

4. Verfahren gemäß einem oder mehrerer der Ansprüche 1 oder 3, dadurch gekennzeichnet, daß die Menge der Sinteradditive 0,2 bis 10 Gew.-%, bevorzugt 0,5 bis 2 Gew.-%, beträgt.

5. Verfahren gemäß einem der Ansprüche 1 bis 4, dadurch gekennzeichnet, daß die Sinteradditive Metalloxide, bevorzugt Spinelle oder während der Reaktionsbedingungen Spinelle bildende Metallverbindungen, sind.

6. Verfahren gemäß einem der Ansprüche 1 bis 5, dadurch gekennzeichnet, daß als Sinteradditiv $\alpha$-$Al_2O_3$ eingesetzt wird.

7. Verfahren gemäß einem oder mehrerer der Ansprüche 1 bis 6, dadurch gekennzeichnet, daß als Säure $HNO_3$ eingesetzt wird.

8. Verfahren gemäß einem oder mehrerer der Ansprüche 1 bis 7, dadurch gekennzeichnet, daß das Reaktionsprodukt schrittweise calziniert wird.

9. Verfahren gemäß einem oder mehreren der Ansprüche 1 bis 8, dadurch gekennzeichnet, daß abschließend eine Sinterung bei Temperaturen zwischen 1200 und 1600°C, vorzugsweise 1300 bis 1380°C, durchgeführt wird.

**Claims**

1. A process for the production of $\alpha$-$Al_2O_3$ sintered compacts in which an $Al_2O_3$ starting material is subjected to a hydrothermal treatment and the resulting product is dried, calcined and sintered, characterized in that a chi-$Al_2O_3$ is used as the $Al_2O_3$ starting material and the hydrothermal treatment is carried out in the presence of catalytic quantities of acid and sintering additives.

2. A process as claimed in claim 1, characterized in that the chi-$Al_2O_3$ is produced from aluminium trihydrate by shock heating in a Schoppe chamber.

3. A process as claimed in claim 1 or 2, characterized in that the hydrothermal treatment is carried out for 30 mins. to 5 hours at temperatures of 150 to 250°C.

4. A process as claimed in one or more of claims 1 and 2, characterized in that the sintering additives are used in a quantity of 0.2 to 10% by weight and preferably in a quantity of 0.5 to 2% by weight.

5. A process as claimed in any of claims 1 to 4, characterized in that the sintering additives are metal oxides, preferably spinels, or metal compounds which form spinels under the reaction conditions.

6. A process as claimed in any of claims 1 to 5, characterized in that $\alpha$-Al$_2$O$_3$ is used as a sintering additive.

7. A process as claimed in one or more of claims 1 to 6, characterized in that HNO$_3$ is used as the acid.

8. A process as claimed in one or more of claims 1 to 7, characterized in that the reaction product is calcined in steps.

9. A process as claimed in one or more of claims 1 to 8, characterized in that, in a concluding step, sintering is carried out at temperatures of 1200 to 1600°C and preferably at temperatures of 1300 to 1380°C.

**Revendications**

1. Procédé de préparation de corps frittés à base d'alumine $\alpha$ dans lequel l'alumine servant de matière première est soumise à un traitement hydrothermique, le produit ainsi obtenu étant séché, calciné et fritté, caractérisé en ce que l'on utilise comme alumine de l'alumine chi et que le traitement hydrothermique est effectué en présence de quantités catalytiques d'acide et d'additifs de frittage.

2. Procédé selon la revendication 1, caractérisé en ce que l'on prépare l'alumine chi en chauffant brusquement du trihydrate d'aluminium dans une chambre de Schoppe.

3. Procédé selon l'une des revendications 1 ou 2, caractérisé en ce que le traitement hydrothermique est effectué à des températures comprises entre 150 et 250°C pendant une période allant de 1/2 h à 5 h.

4. Procédé selon une ou plusieurs des revendications 1 à 3, caractérisé en ce que la quantité des additifs de frittage est comprise entre 0,2 et 10% en poids et, de préférence, entre 0,5 et 2% en poids.

5. Procédé selon l'une des revendications 1 à 4, caractérisé en ce que les additifs de frittage sont des oxydes métalliques et, de préférence, des spinelles ou des composés métalliques formant des spinelles dans les conditions de la réaction.

6. Procédé selon l'une des revendications 1 à 5, caractérisé en ce que l'on utilise comme additif de frittage de l'alumine $\alpha$.

7. Procédé selon une ou plusieurs des revendications 1 à 6, caractérisé en ce que l'on utilise comme acide du HNO$_3$.

8. Procédé selon une ou plusieurs des revendications 1 à 7, caractérisé en ce que le produit de la réaction est calciné graduellement.

9. Procédé selon une ou plusieurs des revendications 1 à 8, caractérisé en ce que l'on effectue ensuite un frittage à des températures comprises entre 1200 et 1600°C et, de préférence, entre 1300 et 1380°C.